# EUROPEAN PATENT SPECIFICATION

(11) **EP 0 468 763 B1**
(45) Date of publication and mention of the grant of the patent: **01.06.1994**
(21) Application number: 91306738.5
(22) Date of filing: 24.07.1991
(51) Int. Cl.: H02K 37/14

(54) **Permanent magnet type stepping motor**
Schrittmotor vom Permanentmagnet-Typ
Moteur pas à pas du type à aimant permanent

(30) Priority: 25.07.1990 JP 78901/90 U
(43) Date of publication of application: 29.01.1992
(73) Proprietor: Oki Electric Industry Co., Ltd., Tokyo (JP)
(72) Inventor: Mizutani, Minoru, c/o OKI ELECTRIC IND. CO LTD., Minato-ku, Tokyo (JP); Hayashi, Kuniharu, c/o OKI ELECTRIC IND. CO LTD., Minato-ku, Tokyo (JP); Sato, Toshiyuki, c/o OKI ELECTRIC IND. CO LTD., Minato-ku, Tokyo (JP)
(74) Representative: Read, Matthew Charles

(56) References cited:
- EP-A- 0 341 867
- DE-A- 2 613 038
- DE-A- 3 238 262
- PATENT ABSTRACTS OF JAPAN vol. 12, no. 256 (E-635)(3103) 19 July 1988, & JP-A-63 043562 (TOKYO ELECTRIC CO.,LTD.) 24 February 1988,

## Description

The present invention relates to a permanent magnet type (PM type) stepping motor.

A stepping motor can be used for driving, e.g. a print head or the platen roll of a printer. A stepping motor of this type is disclosed in US-A-4990806. A PM type stepping motor comprises in general coils wound around pole pieces, ring-shaped stators and a rotor composed of a permanent magnet disposed at the central portion of the stators.

In conventional PM type stepping motors a problem exists in that drive efficiency of the motor is decreased by eddy currents and heat generation caused by Joule heating.

It is an object of the present invention to provide a PM type stepping motor capable of reducing eddy currents generated in its stators.

It is another object of the present invention to provide a PM type stepping motor capable of performing a high drive efficiency.

A permanent magnet type stepping motor is known from GB-A-2211030 which comprises a stator including first and second coaxial, axially spaced coils each coil being located between respective ring-shaped inner and outer stator portions; a rotor having a plurality of alternately circumferentially arranged N and S permanent magnetic poles rotatably supported by the stator and disposed within the first and second coils; a plurality of interdigitated pole pieces extending axially from the inner and outer stator portions associated with each coil; and a gap between the inner margins of the inner stator portions.

A motor according to the present invention is characterised in that the inner margins of the inner stator portions are displaced axially of the outer margins thereof to define said gap.

With the arrangement set forth above, the magnetic reluctance between the stators is increased and the eddy current can be reduced by reducing the magnetic flux which passes in the axial direction of the pole pieces positioned at upper and lower positions.

An embodiment of the present invention will now be described by way of example, with reference to the accompanying drawings, in which:
Figure 1 is a perspective view of an example of a PM type stepping motor according to the present invention;
Figure 2 is a cross sectional view of the PM type stepping motor shown in Figure 1;
Figure 3 is an exploded perspective view of the PM stepping motor of Figure 1;
Figure 4 is a cross sectional view of pole pieces which are constituents of the PM type stepping motor in Figure 3;
Figure 5 is a view showing a magnetic path in Figure 2;
Figure 6 is a view showing another magnetic path in Figure 2; and
Figure 7 is a view showing an eddy current.

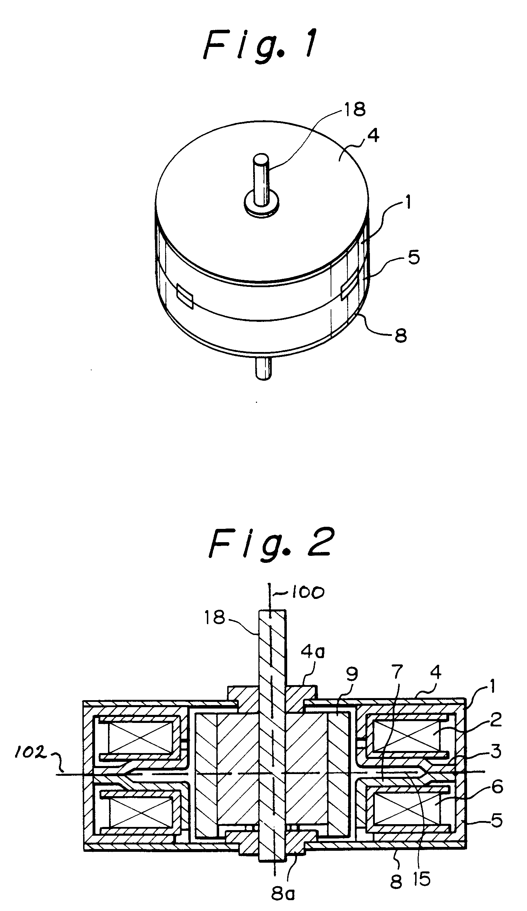

Figure 1 is an external view of a PM type stepping motor according to a preferred embodiment of the present invention. As illustrated in Figure 1, the motor comprises stator portions 1 and 5 and supporting plates 4 and 8. A motor shaft 18 is fixed to the central portion of the stator portions 1 and 5.

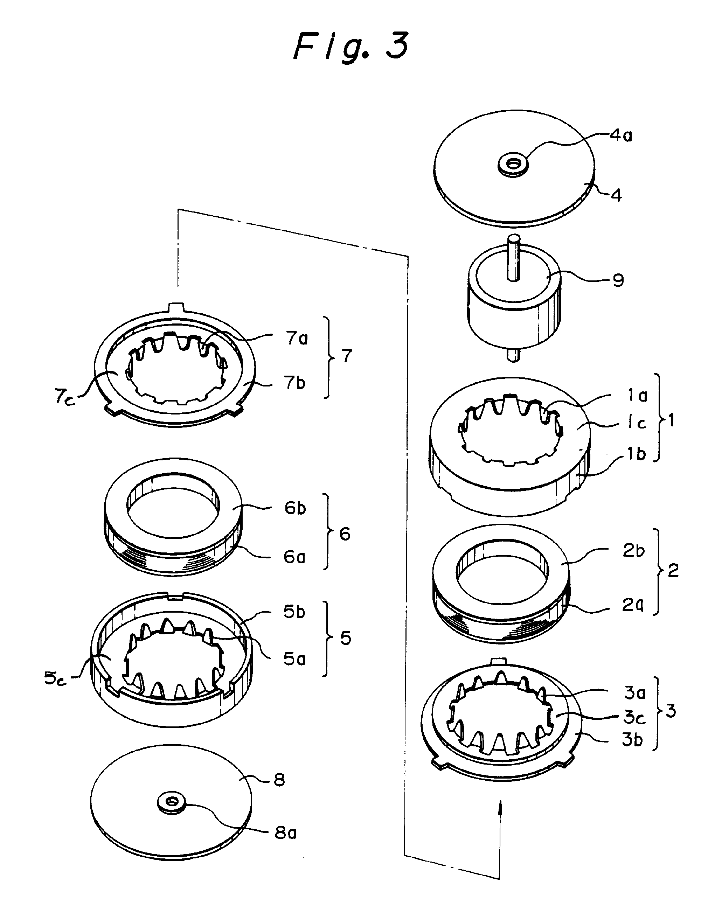

In Figure 2, elements denoted at 1, 3, 5 and 7 are stators and formed by bending or drawing a magnetic plate, stator portions 1 and 3 forming a first stator assembly and stator portions 5 and 7 forming a second stator assembly. The first and second stator assemblies are arranged coaxially about a longitudinal axis 100, and are separated by a plane 102 extending transverse to the longitudinal axis. As illustrated in Figure 3, the stator portions 1 and 5 have respectively cap-shaped configurations and have a plurality of pole pieces 1a and 5a formed by bending them at right angles at central openings thereof. Stator portions 1 and 5 are also provided with annular yokes 1b and 5b and central portions 1c and 5c respectively. Likewise, the stator portions 3 and 7 are formed in the ring-shaped and have a plurality of pole pieces 3a and 7a formed by bending them at right angles at the central openings thereof.

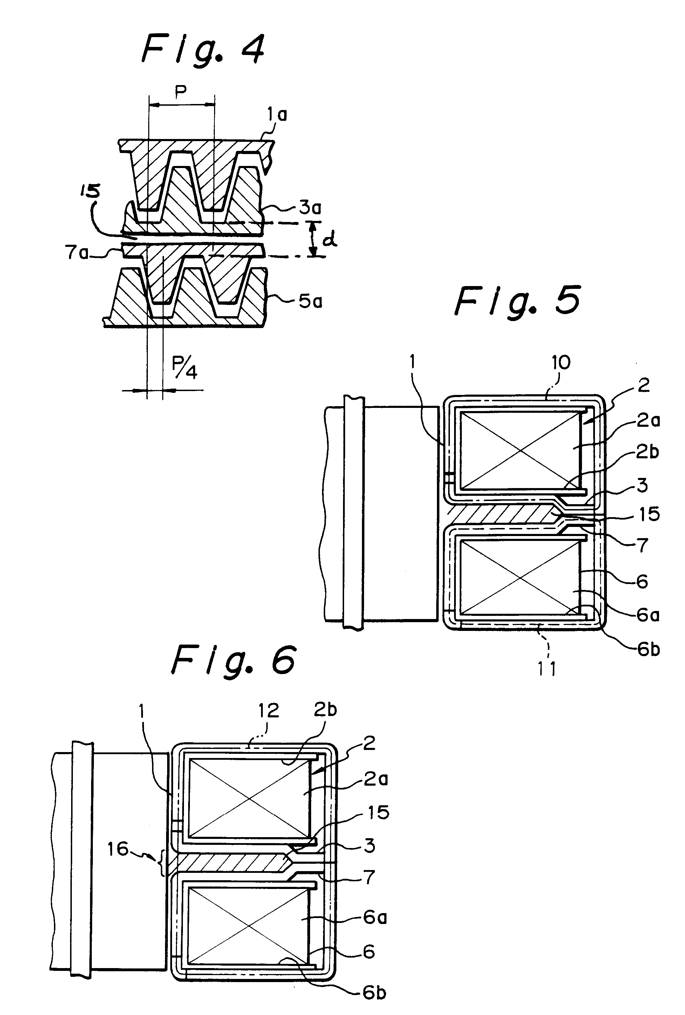

As shown in Figure 4, when the stator portions 1 and 3 are assembled, the pole pieces 1a and 3a are alternately arranged about the circumferences thereof. Likewise, the pole pieces 5a and 7a are alternately arranged about the circumferences thereof. The pole pieces 1a and 3a of a first group and pole pieces 5a and 7a of a second group are disposed at a displacement of P/4 where P is the equal angular interval between the pole pieces. The displacement of P/4 corresponds to a π/2 electrical phase difference. The stator portions 3 and 7 protrude at the inner margins 3c and 7c thereof while the peripheries thereof do not protrude (see Figure 3). The inner margin 3c of the stator 3 protrudes upward while the inner margin 7c of the stator portion 7 protrudes downward. The upward and downward protrusions can be formed by subjecting the plate to a drawing process. Inasmuch as the inner margins of the stator portions 3 and 5 protrude while the outer margins (3b,7b) thereof do not protrude, a gap d is defined between the roots of the teeth of the pole pieces 3a and 7a.

Denoted as 2 is a first coil assembly composed of a first bobbin 2b and a first coil 2a wound around the bobbin 2b (figure 3). Denoted at 6 is a second coil assembly composed of a second bobbin 6b and a second coil 6a wound around the bobbin 6b. Denoted at 9 is a permanent magnet having n pieces of N-poles and S-poles alternately polarized and arranged along the circumference thereof. A ferrite magnet available at low cost is used as the permanent magnet. A rare-earth magnet, such as a SmCo based magnet may also be used as the permanent magnet. Denoted at 4 and 8 are supporting plates having bearings 4a and 8a at the central portions thereof for supporting a shaft 18 of the permanent magnet 9.

A gap 15 is defined between the roots of the teeth of the pole pieces 3a and 7a, forming an air layer, as shown in Figures 2, 3 and 4, for increasing the magnetic reluctance in the magnetic circuit formed by the first and second stator portions 3 and 7 when the first and second stator portions 3 and 7 are assembled.

The operation of the PM type stepping motor of the present invention will be described with reference to Figures 2 to 7.

When first and second alternating currents are applied to the first and second coils 2a and 6a, which are staggered by 1/4 period, a rotating magnetic field is generated whereby the permanent magnet 9 is rotated in synchronization with the rotating magnetic field. When the current is applied to the first and second coils 2a and 6a, the route of magnetic flux, i.e., magnetic paths are formed as illustrated in Figures 5 and 6.

Referring to Figures 3 and 5, the magnetic flux generated by the coil 2a passes through a magnetic path 10 defined by the pole pieces 1a and 3a, yoke 1b and outer and inner margins 3b, 3c as illustrated by a dotted chain line. Similarly, referring to Figures 3 and 6, the magnetic flux generated by the coil 6a passes through a magnetic path 12 defined by the pole pieces 5a and 7a, yoke 5b and outer and inner margins 7b,7c.

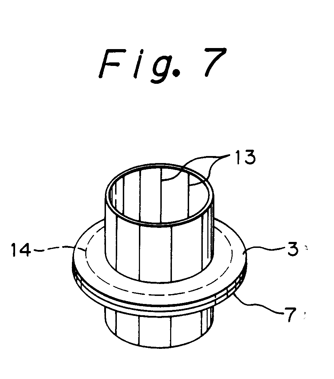

The eddy current will be described with reference to Figures 3 and 7. The eddy current, which follows a path 14 in the stator portions 3 and 7, is generated by the magnetic flux piercing axially the upper pole pieces la and 3a and the lower pole pieces 5a and 7a. That is, the eddy current is generated by a magnetic flux 13 passing through the magnetic path 12 as illustrated in Figure 6. The magnetic flux 13 generates a circumferential magnetic field in stator portions 3 and 7 whereby the eddy current 14 is generated in the stator portions 3 and 7.

In a PM stepping motor of the present invention, since an air layer is defined between the first and second stator portions 3 and 7 by the gap 15 defined between the pole pieces 3a and 7a at the roots thereof, the magnetic flux passes with difficulty through the magnetic path. The reason is that permeability of the magnetic material is several hundred times greater than that of the air layer thereby rendering the magnetic relucance in the air layer 15 extremely high and also making it difficult for the magnetic flux to pass through the portion as denoted at 16. Accordingly, no eddy current is generated.

The air layer may be defined as part of the magnetic path 12, as illustrated in Figure 6.

As explained above, since the PM stepping motor according to the present invention has gaps between the first and second stators, it is possible to increase the magnetic reluctance in the magnetic circuit formed by the first and second stators. Accordingly, the eddy current loss is reduced thereby preventing the drive efficiency of the PM motor from being decreased and prevent the PM motor from overheating.

The PM motor of the present invention enables the print head and the like in a printer to be driven stably for a long period of time.

## Claims

1. A stepping motor comprising:
a stator including first and second coaxial,
axially spaced coils (2a, 6a), each coil (2a, 6a) being located between respective ring-shaped inner and outer stator portions (1, 3; 7, 5);
a rotor (9) having a plurality of alternately circumferentially arranged N and S permanent magnetic poles rotatably supported by the stator and disposed within the first and second coils (2a, 6a); a plurality of interdigitated pole pieces (1a, 3a, 5a, 7a) extending axially from the inner and outer stator portions (1, 3; 7,5) associated with each coil; and a gap (15) between the inner margins (3c, 7c) of the inner stator portions (3, 7),
**characterised in that**
the inner margins (3c, 7c) of the inner stator portions (3, 7) are displaced axially of the outer margins (3b, 7b) thereof to define said gap (15).

2. A stepping motor according to claim 1, wherein the inner stator portions (3, 7) each consist of an inner margin (3c, 7c) and an annular substantially planar outer margin (3b, 7b) surrounding the inner margin (3c, 7c), the inner margin (3c, 7c) protruding from the plane of the outer margin (3b, 7b) in a direction away from a transverse plane (102) through the motor thereby forming the gap between the inner margins (3c, 7c) of the inner stator portions (3, 7).

## Patentansprüche

1. Schrittmotor, enthaltend:
einen Stator mit einer ersten und einer zweiten koaxialen Spule (2a, 6a), die axial im Abstand angeordnet sind, wobei sich jede Spule (2a, 6a) zwischen jeweiligen ringförmigen inneren und äußeren Statorabschnitten (1, 3; 7, 5) befindet;
einen Rotor (9) mit einer Vielzahl von abwechselnd am Umfang angeordneten N- und S-Permanentmagnetpolen, der drehbar mittels des Stators gelagert ist und innerhalb der ersten und der zweiten Spule (2a, 6a) angeordnet ist; eine Vielzahl von fingerförmig ineinandergreifenden Polschuhen (1a, 3a, 5a, 7a), die sich axial von den zu jeder Spule gehörenden inneren und äußeren Statorabschnitten (1, 3; 7, 5) aus erstrecken; und eine Lücke (15) zwischen den inneren Rändern (3c, 7c) der inneren Statorabschnitte (3, 7);
dadurch gekennzeichnet, daß
die inneren Ränder (3c, 7c) der inneren Statorabschnitte (3, 7) axial zu deren äußeren Rändern (3b, 7b) versetzt sind, um die Lücke (15) zu bilden.

2. Schrittmotor nach Anspruch 1, worin jeder innere Statorabschnitt (3, 7) aus einem inneren Rand (3c, 7c) und einem ringförmigen, im wesentlichen ebenen äußeren Rand (3b, 7b) besteht, der den inneren Rand (3c, 7c) umgibt, wobei der innere Rand (3c, 7c) von der Ebene des äußeren Rands (3b, 7b) in einer Richtung weg von einer quer verlaufenden Ebene (102) durch den Motor vorspringt, wodurch die Lücke zwischen den inneren Rändern (3c, 7c) der inneren Statorabschnitte (3, 7) gebildet wird.

## Revendications

1. Moteur pas à pas comprenant un stator ayant des premier et second bobinages coaxiaux (2a, 6a) distants l'un de l'autre dans la direction de l'axe, chaque bobinage (2a, 6a) étant placé entre des éléments intérieurs et extérieurs respectifs annulaires de stator (1, 3 ; 7, 5) , un rotor (9) ayant de multiples pôles magnétiques N et S à aimantation permanente, disposés en alternance à la circonférence, le rotor étant supporté rotatif par le stator et étant disposé entre les premier et second bobinages (2a, 6a), de multiples pièces polaires intercalées (1a, 3a, 5a, 7a) partant axialement des éléments intérieurs et extérieurs de stator (1, 3 ; 7, 5) associés à chaque bobinage, ainsi qu'un entrefer (15) situé entre les bords intérieurs (3c, 7c) des éléments intérieurs de stator (3, 7), caractérisé en ce que les bords intérieurs (3c, 7c) des éléments intérieurs de stator (3, 7) sont décalés axialement par rapport à leurs bords extérieurs (3b, 7b) de manière à délimiter ledit entrefer (15).

2. Moteur pas à pas selon la revendication 1, dans lequel chacun des éléments intérieurs de stator (3, 7) consiste en un bord intérieur (3c, 7c) et en un bord extérieur annulaire sensiblement plan (3b, 7b) entourant le bord intérieur (3c, 7c), le bord intérieur (3c, 7c) étant saillant sur le plan du bord extérieur (3b, 7b) dans un sens l'éloignant d'un plan transversal (102) passant à travers le moteur, de manière à former l'entrefer entre les bords intérieurs (3c, 7c) des éléments intérieurs de stator (3, 7).
